Europäisches Patentamt

European Patent Office

Office européen des brevets

(11) Publication number: **0 416 474 A2**

# EUROPEAN PATENT APPLICATION

(21) Application number: 90116706.4

(51) Int. Cl.5: **B29B 15/12**

(22) Date of filing: 31.08.90

(30) Priority: 05.09.89 US 402238

(43) Date of publication of application:
**13.03.91 Bulletin 91/11**

(84) Designated Contracting States:
**BE DE ES FR GB IT NL**

(71) Applicant: BASF Aktiengesellschaft
Carl-Bosch-Strasse 38
W-6700 Ludwigshafen(DE)

(72) Inventor: **Hartness, J. Timothy**
**26008 Morningside Drive**
**Tega Cay, SC 29715(US)**

(74) Representative: **Mutzbauer, Helmut, Dr. et al**
**BASF Aktiengesellschaft Patentabteilung**
**ZSP-C 6 Carl-Bosch-Strasse 38**
**W-6700 Ludwigshafen(DE)**

(54) Process for powder impregnation of woven fiber reinforcement.

(57) Powder impregnation of woven fiber reinforcement by immersing such fabric in a resin particle slurry is improved through the utilization of sonic energy having a frequency in excess of 10Khz.

FIGURE 1

Xerox Copy Centre

## PROCESS FOR POWDER IMPREGNATION OF WOVEN FIBER REINFORCEMENT

The subject invention pertains to a process for the powder impregnation of woven fiber reinforcement to form thermally processable prepregs. More particularly, it pertains to the use of sonic vibration, particularly ultrasonic vibration, to assist takeup of powder particles by the fibrous reinforcement.

Recently, the so-called powder impregnation method has been commercialized to prepare thermoplastic matrix resin, fiber reinforced prepregs. According to this process, the fiber reinforcement, in the form of parallel fibers, strands, or tows, are immersed in an aqueous slurry of the thermoplastic which is present in finely divided powder form. Following its exit from the powder slurry, the prepreg is passed through a dam or between nip rollers or their equivalent to remove excess powder slurry, and then dried. Resin contents of from 10 to about 50 weight percent are routinely achieved using this process.

However, the process of powder impregnation has not been successfully applied to woven material because the fiber strands or tows of such materials are relatively locked in position in the weave and cannot be spread apart for impregnation as can parallel strands and tows. The result is a woven fiber reinforced prepreg with both a low resin takeup, as well as an uneven thermoplastic content which can often be detected visually.

Ultrasonic vibration has been used in the past to assist the takeup of liquid resins by reinforcing fibers. In Japanese patent JP 62108009, for example, ultrasonic vibration is said to reduce entrained air bubbles in a solvent, thus increasing the impregnation speed of woven glass cloth with liquid thermosetting resins. In Federal Republic of Germany patent DE 3521229, ultrasonic vibration is said to assist the impregnation of needle fiber mats with molten thermoplastics such as polypropylene. In International Patent Application WO 88/03468, is disclosed the use of vibrating bars or rollers to aid in the impregnation of spread tows of unidirectional fibers which are free to move in a direction transverse to the fiber direction. However, none of these references discloses or suggests the use of ultrasonic vibration to assist in impregnation of woven fiber reinforcement with thermosetting or thermoplastic polymer particles from a polymer slurry.

It has now been surprisingly discovered that sonic vibration is useful in the preparation of prepregs containing woven fiber reinforcement by the powder impregnation method, and that the prepregs thus obtained have both acceptable resin content and distribution. According to the process of the invention, the woven fiber reinforcement is directed into and through a slurry of polymer powder by means of redirect bars, rollers, or other means, during which time the polymer slurry is irradiated with sonic energy. In the preferred embodiments, the fiber fabric is directed through the bath at as close to zero tension as possible, and the polymer particles are thermoplastic particles having a mean particle size of 20 microns or less.

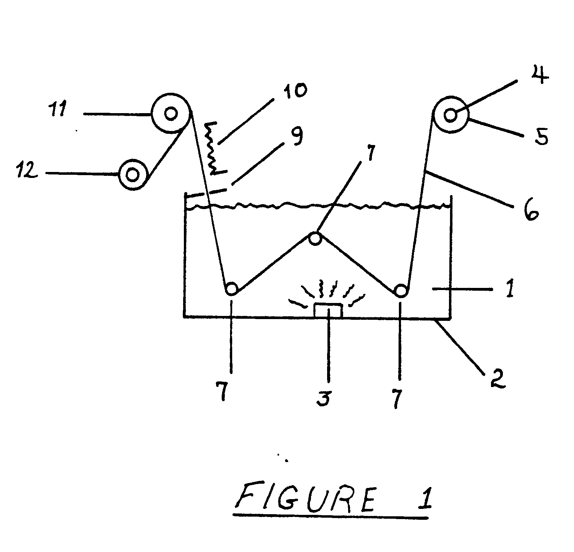

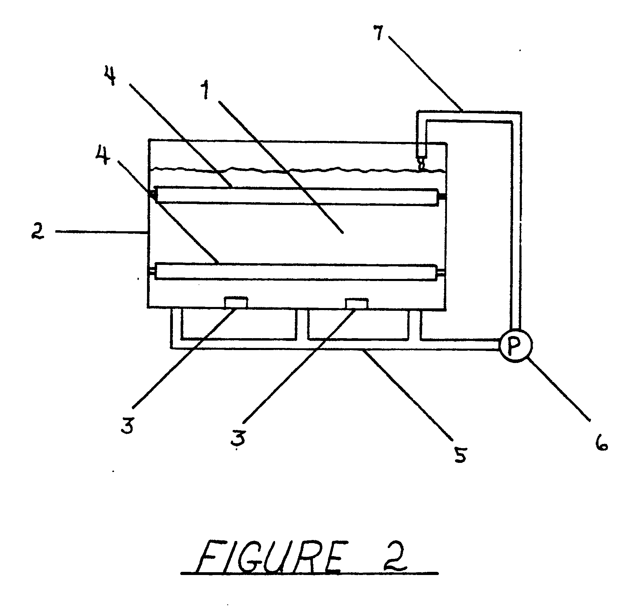

Figure 1 illustrates one embodiment of the path taken by the fiber fabric. Figure 2 illustrates one embodiment of the polymer slurry bath showing the distribution of ultrasonic transducers.

The woven fiber reinforcing fabrics useful in the practice of the subject invention are well known to those skilled in the art of fiber reinforced prepregs and composites. Such fabrics are produced by traditional weaving processes using long or continuous fibers, generally in the form of multifiber tows. Fabrics may be tightly or loosely woven with numerous warp and weft patterns. In a preferred embodiment, the fabric consists of tows containing 3K individual carbon fibers woven in an 8-harness weaving style.

The fibers useful in the woven fabrics are any fiber which can withstand the processing temperature of the composite. For example, when the thermoplastic matrix resin is one of low melting temperature, then high melting organic fibers, for example polyetherketone, polyetherketoneketone, polyethersulfone, liquid crystalline polyester, and polyaramide may be used. In general, however, the thermoplastic matrix resin has a high melting point, and thus inorganic fibers are most commonly used. These fibers include high, medium, and low modulus carbon or graphite fibers (hereinafter, carbon fibers); glass fibers, whether of borosilicate glass, fused quartz, or other glasses; silicon carbide; boron nitride; ceramic fibers; and the like. The fibers useful are generally prepared in the form of continuous fibers. However, shorter fibers which are capable of being woven may be useful as well.

The polymer slurry is composed of one or more thermoplastic or thermosetting resins or their mixtures, in the form of fine particles, preferably less than $50\mu m$ in diameter, and more preferably 90% being lower than $20\mu m$ in diameter. Most preferably, 90% of the particles will be less than $10\mu m$ in diameter. All diameters are as measured, for example, by a Malvern Particle Size Analyzer.

The polymer resins used to form the particles may be thermosetting or thermoplastic resins or mixtures thereof. Thermosetting resins suitable include the solid epoxy, bismaleimide, and cyanate resins and their comonomers or curing agents, for example dicyandiamide and 4,4′-diaminodiphenylsulfone in the case of epoxy resins; and solid allylphenol terminated oligomers in the case of the bismaleimide resins. Powder impregnation with thermosetting resin particles may be used in conjunction with a subsequent hot melt film impregnation.

Preferably, however, the polymer resin particles are thermoplastic resins, in particular, those of high melting points. Of the low melting resins which may be useful may be mentioned polyethylene, polypropylene, polyisobutylene, polybutyleneterephthalate, and the like. The high melting thermoplastic resins are well known to those skilled in the art of thermoplastic composites. These resins include the polyarylene polymers having repeating units which may be characterized as

{Ar-X}

where X is an organic linking group such as sulfide, oxide, sulfone, ketone, carbonate, amide, a $C_1$-$C_{12}$ alkyl group, or a direct bond and the like. Some such polymers are known as polyarylenesulfides, polyethersulfones, polyetherketones, polyetheretherketones, polyetherketoneketones, polyetheretherketoneketones, and polyphenylene oxides. Other thermoplastics useful include and thermoplastic polyimides, polyetherimides, polyesterimides, polyamideimides, and the like. Both homopolymeric and copolymeric thermoplastics may be used as well as their mixtures. This list of high temperature thermoplastics is by way of example and not limitation.

Also useful and highly preferred are certain thermoplastic polyimides which also contain a heat activatable crosslinking group in the polymer chain and/or as an end group of a polymer chain. Such polymers act like thermoplastics during processing, but cure to a crosslinked state which is more resistant to heat and solvents. An example of such a polyimide is preimidized PMR-15 polyimide available from Dexter Composites, believed to be a relatively low molecular weight oligomeric polyimide containing the residues of methylenedianiline, and benzophenone tetracarboxylic acid dianhydride, and containing nadic imide end groups. The terms "resin powder", "resin particles", "polymer particles" and the like are inclusive of both true polymers (i.e. thermoplastics) as well as the resins necessary to create thermosetting polymers.

The polymer powder is utilized in the form of a slurry. The liquid continuous phase of the slurry is preferably water due to its low cost and its environmental and toxicological superiority over other liquids. However, any liquid in which the polymer powder is essentially insoluble may be used. Such liquids may include, for example, methanol, ethanol, propanol, isopropanol, chloroform, methylene chloride, acetone, 2-butanone, N-methylpyrrolidone, ethylene glycol, and the like. Preferably, liquids which volatilize rapidly upon heating are utilized.

The solids content of the slurry generally lies between 15 and 50 weight percent, but preferably lies between 20 and 35 weight percent. With 3K carbon fibers tows in an 8-harness satin weave, solids contents of from 24 to about 34 weight percent have proven acceptable. The viscosity of the slurry increases with increasing polymer content and decreases with increasing particle size. Generally speaking, the polymer slurry also may contain small quantities of other ingredients, particularly binders and dispersants. Binders may serve a dual purpose of adjusting the viscosity of the polymer slurry and in acting as a binder and/or tackifier for the "dry" prepreg. Such binders are generally, but not always necessary to avoid loss of thermoplastic powder when handling the prepreg. The term "dry" is used in its relative sense, as denoting a prepreg from which a portion of the liquid continuous phase of the polymer slurry has been removed. Actually, such "dry" prepregs may be saturated with water vapor or contain minor amounts of residual liquid continuous phase. Suitable binders include high molecular weight surface active polymers soluble in the liquid continuous phase. Examples of such binders include the very high molecular weight polyoxyethylene glycols, the higher molecular weight polyacrylic acids, and like compounds. Preferred binders are the Carbopol® water soluble polymers produced by the B.F. Goodrich Corporation. Preferably, the Carbopol® type binder is not neutralized, as the neutralized (ammonium hydroxide) binder is more easily broken up by the ultrasonic vibrations, as well as having the effect of undesirably increasing the viscosity. However, binder free dispersions may also be used for impregnation utilizing the process of the subject invention.

The dispersant is also an optional ingredient which assists in maintaining the polymer particles in a dispersed state and helps in wetting of the fibers in the fabric. Dispersants may function by preventing agglomeration of the fine polymer particles into aggregates, by increasing the interaction between the liquid continuous phase and the polymer surface, or by both or other means. Suitable dispersants include the alkylarylsulfonates, the polyoxyethylene-polyoxypropylene block polyether surfactants, the sodium sulfosuccinates, and the like. A suitable dispersant is Triton® X-100, a product of the Rohm and Haas Corporation and ICONOL OP-10, a BASF product.

The frequencies useful for impregnation range from 10khz to upwards to 100khz. The ultrasonic frequencies are most desirable for audiological environmental reasons. These frequencies range upward from about 20 Khz. The frequencies are generated by a transducer, generally a piezoelectric crystal energized by an oscillator supplying the requisite frequency. Such transducers and their energizing sources are commercially available from many sources, and have been used in ultrasonic cleaning baths for many years. The nature of the transducer and its arrangement in the impregnation both is not overly critical so long as the power distribution is relatively uniform. When wide cloth is being impregnated, it is desirable to locate several transducers roughly perpendicular to the direction of travel of the cloth and uniformly distributed across the width of the bath. Other equivalent means of inducing sonic or ultrasonic energy may also be utilized, for example by vibrating bars or rollers.

The power output required for impregnation may readily be determined by measuring the polymer uptake at various power levels. Using a rectangular polymer slurry bath measuring 25 cm high by 35 cm wide by 25 cm deep and employing six 250 watt transducers available from Crest Ultrasonics Corporation, Trenton, N.J., efficient impregnation occurs with the power intensity control of the "Genesis" plug-in generator module, supplied by the same company, at its lowest setting. In general, low settings are preferred, as under these conditions minimal heating of the polymer slurry occurs, resulting in minimizing change in viscosity. It is believed that power levels of from 0.1 to about 1000 watts per cubic meter are useful in the practice of the invention.

Referring to figure 1, the woven fiber cloth (6) is drawn from roll (5) which is mounted on a low friction roller or servo assisted roller (4) in order to allow the fabric to be drawn through the polymer slurry (1) and around bars to rollers (7) with minimal tension. The slurry (1) is contained within a tank (2) which is preferably of a non-corrosive material, e.g. stainless steel. Within the tank is located the ultrasonic tranducer(s) (3). Following its exit from the bath, the prepreg may be pressed through dam (9) to remove excess polymer slurry, and then by radiant heater 10 which may be adjusted in size and power output to remove some or all of the liquid continuous phase from the prepreg. The prepreg is taken up by take-up spool (11). An optional release film, generally a polyethylene or poly propylene film, may be supplied by spool (12). Not shown is a recirculating pump which is generally necessary to maintain the polymer particles in suspension.

Figure 2 shows a section of the polymer slurry tank transverse to the direction of the fabric movement. At the bottom of the tank (2) are located one or more ultrasonic transducers (3). The power supply to the transducers is not shown. Under the surface of the polymer slurry (1) are redirect bars or rollers (4) around which the fabric passes during impregnation. Polymer slurry is continuously drawn from the bottom of the tank through manifold (5) and recirculated via the recirculation line (7) by pump (6).

The residence time of the fabric through the bath may be adjusted so as to achieve the desired degree of impregnation. The process of the subject invention not only decreases residence time significantly for a given level of impregnation, but moreover, allows a higher degree of impregnation than is possible using the same polymer slurry concentration irrespective of residence time. Solids content in the prepreg is usually higher than the bath weight percent. Residence times of from less than 5 to greater than 200 seconds are useful, however it has been found that full-bundle impregnation can routinely be achieved in 20-40 seconds. While related to tank size, lineal fabric speeds of 60 cm/minute have been achieved with a tank whose length in the direction of fabric movement is 75 cm.

The subject invention will now be illustrated by reference to the following actual examples. In the subject invention impregnation examples, a polymer slurry bath and sonic irradiation means was employed substantially as described in the drawings. Fabric speed was 60 cm/minute. All parts are parts by weight.

## Slurry A

A polymer slurry was prepared by dissolving 0.07 parts Carbopol® 941 and 0.05 parts Triton® X-100 in 74.89 parts deionized water, following which 24.98 parts PMR-15 preimidized polyimide having a particle size such that 90% of the particles have diameters less than 10μm, was dispersed into the aqueous solution. The resulting thermoplastic polymer slurry had a viscosity of between 25-30 centipoise.

## Slurry B

A polymer slurry was prepared as in Example 1 but with 27 parts PMR-15 and correspondingly less water.

Examples 1-3, 2C

Carbon fiber fabric in an 8-harness satin weave, the tows of which are 3K Celion® G-30-500, and which was devoid of size, was passed through the polymer slurries A and B. In Example 3, the prepreg was initially dried, then passed through the polymer slurry a second time. As a comparison (Comparison Example 2C), a piece of fabric was immersed in the polymer slurry for 20 seconds with no ultrasonic vibration. The results of these experiments are presented in Table I below.

TABLE I

| Example | Polymer Slurry | Polymer Type | Polymer Concentration,% | Wt.% Solids In Prepreg | Prepreg Fiber Volume,% |
|---------|---------|------|------------------|-----------------|------------------|
| 1 | A | PMR-15 | 25 | 27-28 | 66-67 |
| 2 | B | PMR-15 | 27 | 32-33 | 60 |
| 3 | A | PMR-15 | 25 | 37-40[1] | -- |
| 2C | B | PMR-15 | 27 | 20 | -- |

[1] Two passes through bath.

Physical properties of cured composites prepared from the prepregs of Example 3 and composites having similar fiber and thermoplastic content but prepared from solution impregnation are present below.

| Prepreg | Flexural Strength, KSI | Flexural Modulus, MSI |
|---------|------------------|------------------|
| PMR-15 (Example 3) | 140 | 8.7 |
| Fiberite HMF-2423/66C[2] | 137 | 8.6 |

[2] Solution imidized PMR-15 on Celion® 3K 8-harness satin
Average of fill and warp direction values.

## Claims

1. A process for the impregnation of woven fiber reinforced prepregs with resin particles by powder impregnation, comprising
   a) transporting woven fiber reinforcement through a slurry of resin particles having a mean size less than 50$\mu$m in a liquid continuous phase; and
   b) applying to said slurry during said transport, sonic energy;

2. The process of claim 1 wherein said resin is a thermoplastic resin.

3. The process of claim 1 wherein said resin is a preimidized polyimide.

4. The process of claim 3 wherein said polyimide contains the residues of benzophenone tetracarboxylic dianhydride and methylenedianiline, and nadic imide end groups.

5. The process of claim 1 wherein said resin is a thermosetting resin selected from the group consisting of epoxy resins, bismaleimide resins, and cyanate resins.

6. The process of claim 1 wherein said sonic energy is ultrasonic energy having a frequency in excess of 20 Khz.

7. The process of claim 1 wherein said sonic energy is present in an amount of from 0.1 watt/m$^3$ to about 1000 watts/m$^3$.

8. The process of claim 1 wherein said resin particles are present in said slurry at a concentration of from 10 to about 50 weight percent.

FIGURE 1

FIGURE 2